# EUROPÄISCHE PATENTSCHRIFT

(11) **EP 3 215 390 B1**
(45) Veröffentlichungstag und Bekanntmachung des Hinweises auf die Patenterteilung: **13.06.2018**
(21) Anmeldenummer: 15797029.4
(22) Anmeldetag: 05.11.2015
(51) Int. Cl.: B60K 23/08

(54) **VERFAHREN ZUM BETREIBEN EINES MEHRACHSANTRIEBSSTRANGS FÜR EIN KRAFTFAHRZEUG SOWIE ENTSPRECHENDER MEHRACHSANTRIEBSSTRANG**
METHOD FOR OPERATING A MULTI-AXLE DRIVE TRAIN FOR A MOTOR VEHICLE, AND CORRESPONDING MULTI-AXLE DRIVE TRAIN
PROCÉDÉ DE COMMANDE D'UNE TRANSMISSION MULTIPLE D'UN VÉHICULE À MOTEUR ET TRANSMISSION MULTIPLE CORRESPONDANTE

(30) Priorität: 06.11.2014 DE 102014016451
(43) Veröffentlichungstag der Anmeldung: 13.09.2017
(73) Patentinhaber: AUDI AG, 85045 Ingolstadt (DE)
(72) Erfinder: WEIDEMANN, Dieter, 85134 Stammham (DE); HANICKEL, Heiko, 85110 Kipfenberg (DE); KOLB, Florian, 85049 Ingolstadt (DE); BRÜHL, Hans Jörg, 85092 Kösching (DE)
(74) Vertreter: Lehle, Josef
(86) Internationale Anmeldenummer: PCT/EP2015/075790
(87) Internationale Veröffentlichungsnummer: WO 2016/071436

(56) Entgegenhaltungen:
- WO-A1-2010/017882
- DE-A1-102010 039 445
- US-A1- 2014 067 217
- US-B1- 6 725 992

## Beschreibung

Die Erfindung betrifft ein Verfahren zum Betreiben eines Mehrachsantriebsstrangs für ein Kraftfahrzeugs, wobei eine erste Achse permanent und eine zweite Achse zumindest zeitweilig mit einer Antriebseinrichtung wirkverbunden sind. Die Erfindung betrifft weiterhin einen Mehrachsantriebsstrang für ein Kraftfahrzeug (siehe beispielsweise WO 2010/017882 A). Der Mehrachsantriebsstrang kann beispielsweise für ein Kraftfahrzeug verwendet werden und insbesondere Bestandteil des Kraftfahrzeugs sein. Der Mehrachsantriebsstrang ermöglicht das Antreiben mehrerer Achsen, beispielsweise der ersten Achse, insbesondere einer Vorderachse, und der zweiten Achse, insbesondere einer Hinterachse, des Kraftfahrzeugs. Eine Wirkverbindung zwischen den Achsen des Kraftfahrzeugs kann dabei über die Verbindungswelle, welche beispielsweise als Kardanwelle vorliegt, hergestellt werden. Häufig ist es wünschenswert, dass mittels des Mehrachsantriebsstrangs lediglich zeitweise ein Mehrachsbetrieb durchgeführt wird, während welchem tatsächlich mehrere der Achsen angetrieben werden. Im Falle des Kraftfahrzeugs ist dies beispielsweise nur dann notwendig, wenn die Traktion bei einem Antreiben nur einer der Achsen zu gering wäre und/oder falls das gewünschte Fahrverhalten nur mit Mehrachsantrieb zu realisieren ist. Häufig ist es daher sinnvoll, mittels des Mehrachsantriebsstrangs lediglich eine der Achsen, nämlich die erste Achse, anzutreiben.

Es ist nun Aufgabe der Erfindung, ein Verfahren zum Betreiben eines Mehrachsantriebsstrangs vorzuschlagen, welches gegenüber dem bekannten Stand der Technik Vorteile aufweist, insbesondere einen Fahrkomfort des Kraftfahrzeugs verbessert.

Dies wird erfindungsgemäß mit einem Verfahren mit den Merkmalen des Anspruchs 1 erreicht. Dabei ist vorgesehen, dass bei von der Antriebseinrichtung entkoppelter zweiter Achse und Vorliegen einer Mehrachsantriebsanforderung mit einem ersten Wert die zweite Achse erst dann mit der Antriebseinrichtung gekoppelt, insbesondere vollständig gekoppelt, wird, wenn ein Geräuschmaskierungsereignis auftritt, oder dass bei mit der Antriebseinrichtung gekoppelter zweiter Achse und Wegfall der Mehrachsantriebsanforderung die zweite Achse erst dann von der Antriebseinrichtung entkoppelt wird, wenn das Geräuschmaskierungsereignis auftritt.

Die Mehrachsantriebsanforderung wird beispielsweise von einem Steuergerät des Mehrachsantriebsstrangs beziehungsweise des Kraftfahrzeugs ausgelöst, insbesondere mit dem ersten Wert. Bevorzugt kann die Mehrachsantriebsanforderung unterschiedliche Werte aufweisen, wobei beispielsweise ein höherer Wert der Mehrachsantriebsanforderung eine höhere Dringlichkeit des Ankoppelns der zweiten Achse an die Antriebseinrichtung beziehungsweise des Koppelns der zweiten Achse mit der Antriebseinrichtung beschreibt. Das Koppeln beziehungsweise Entkoppeln kann in einem einzigen Schritt oder in mehreren Schritten durchgeführt werden. Beispielsweise wird das Koppeln oder Entkoppeln bereits soweit durchgeführt, wie es ohne Kopplungsgeräusch oder lediglich mit einem Kopplungsgeräusch von geringer Intensität möglich ist. Erst ein Schritt, welcher das Kopplungsgeräusch mit einer bestimmten Intensität erzeugt, wird solange verzögert, bis das Geräuschmaskierungsereignis auftritt. Der Einfachheit wegen wird das durch das Koppeln und Entkoppeln erzeugte Geräusch jeweils als Kopplungsgeräusch bezeichnet, wenngleich für letzteres auch die Bezeichnung Entkopplungsgeräusch herangezogen werden kann.

Ist die Antriebseinrichtung von der zweiten Achse entkoppelt und tritt in diesem Zustand des Mehrachsantriebsstrangs die Mehrachsantriebsanforderung mit dem ersten Wert auf, so soll zwar die zweite Achse grundsätzlich mit der Antriebseinrichtung gekoppelt werden. Dies jedoch erst mit Auftreten des Geräuschmaskierungsereignisses. Insbesondere wird das Koppeln der zweiten Achse mit der Antriebseinrichtung also während des Geräuschmaskierungsereignisses durchgeführt. Insoweit wird besonders bevorzugt das Koppeln erst dann vorgenommen, wenn das Geräuschmaskierungsereignis eine entsprechende Länge aufweist beziehungsweise ein Geräuschmaskierungsereignis mit geeigneter Länge auftritt. Diese Ausführungen sind analog auf das Entkoppeln heranzuziehen. Das Entkoppeln soll vorgenommen werden, wenn derzeit die zweite Achse mit der Antriebseinrichtung gekoppelt ist, jedoch auch Mehrachsbetrieb nicht (mehr) gewünscht ist und entsprechend die Mehrachsantriebsanforderung wegfällt beziehungsweise bereits weggefallen ist.

Das Geräuschmaskierungsereignis stellt das Auftreten eines Maskierungsgeräuschs dar, welches ein von dem Koppeln der zweiten Achse mit der Antriebseinrichtung und/oder von dem Entkoppeln der zweiten Achse von der Antriebseinrichtung erzeugtes Geräusch zumindest teilweise, insbesondere vollständig maskiert. Darunter ist zu verstehen, dass das Geräuschmaskierungsereignis verhindert, dass ein Fahrer oder Insassen des Kraftfahrzeugs das durch das Koppeln und/oder Entkoppeln erzeugte Kopplungsgeräusch als störend wahrnehmen.
Beispielsweise weist das Geräuschmaskierungsereignis ein Maskierungsgeräusch auf, welches lauter ist als das Kopplungsgeräusch. Zusätzlich oder alternativ kann das Geräusch des Geräuschmaskierungsereignisses in einem Frequenzbereich vorliegen, welcher ein separates Wahrnehmen des Kopplungsgeräuschs durch die Insassen des Kraftfahrzeugs verhindert oder zumindest abschwächt. Beispielsweise wird dabei der akustische Effekt der Maskierung beziehungsweise der Verdeckung des menschlichen Gehörs genutzt, wie er auch im Falle des MPEG-2 Audio Layer III-Audiokompressionsverfahrens zum Einsatz kommt. Gemäß der Erfindung ist vorgesehen, dass das Koppeln der zweiten Achse mit der Antriebseinrichtung und/oder das Entkoppeln der zweiten Achse von der Antriebseinrichtung verzögert werden, bis das Geräuschmaskierungsereignis vorliegt. Dies wurde bereits mit den vorstehenden Ausführungen im Wesentlichen zum Ausdruck gebracht. Auch bei Vorliegen der Mehrachsantriebsanforderung, insbesondere mit dem ersten Wert, wird also die erste Achse nicht unmittelbar bei Auftreten der Mehrachsantriebsanforderung mit der Antriebseinrichtung gekoppelt. Analog wird das Entkoppeln nicht unmittelbar nach dem Wegfallen der Mehrachsantriebsanforderung durchgeführt. Vielmehr wird das Koppeln beziehungsweise das vollständige Koppeln und/oder das Entkoppeln beziehungsweise das vollständige Entkoppeln verzögert, bis das Geräuschmaskierungsereignis vorliegt beziehungsweise auftritt. Insbesondere erfolgt das Koppeln und/oder Entkoppeln nicht unmittelbar zu Beginn des Geräuschmaskierungsereignisses, sondern erst nach dem Beginn des Geräuschmaskierungsereignisses, also während des Geräuschmaskierungsereignisses.

Es ist also vorgesehen, dass das Koppeln der zweiten Achse mit der Antriebseinrichtung erst zeitverzögert nach dem Auftreten des Geräuschmaskierungsereignisses erfolgt. Durch die Zeitverzögerung, welche in Abhängigkeit von der Art des Geräuschmaskierungsereignisses gewählt werden kann, kann eine zuverlässige Maskierung des Kopplungsgeräuschs durch das Maskierungsgeräusch sichergestellt werden.

Eine Weiterbildung der Erfindung sieht vor, dass das Geräuschmaskierungsereignis ein Betriebszustand des Kraftfahrzeugs, ein Betriebszustandswechsel des Kraftfahrzeugs, insbesondere eines Fahrzeugaggregats, ein Bedienvorgang eines Fahrers und/oder ein Umgebungseinfluss ist. Zum Feststellen des Betriebszustands und insoweit des Geräuschmaskierungsereignisses wird vorzugsweise wenigstens eine Zustandsgröße und/oder Betriebsgröße herangezogen. Insbesondere liegt der Betriebszustand vor, wenn eine Fahrgeschwindigkeit des Kraftfahrzeugs eine bestimmte Geschwindigkeit überschreitet und/oder wenn eine Drehzahl der Antriebseinrichtung größer ist als eine bestimmte Drehzahl. Als Zustandsgröße wird beispielsweise der Öffnungsgrad wenigstens eines Fahrzeugverschlusses, insbesondere eines Seitenfensters und/oder eines Schiebedachs, herangezogen. Sobald der Öffnungsgrad auf einen geöffneten Fahrzeugverschluss hindeutet, liegt vorzugsweise das Geräuschmaskierungsereignis vor.

Alternativ oder zusätzlich kann das Kraftfahrzeug beziehungsweise das Fahrzeugaggregat während des Betriebszustandswechsels das Maskierungsgeräusch des Geräuschmaskierungsereignisses erzeugen. Als Fahrzeugaggregat kommt beispielsweise ein Getriebe oder eine Scheibenwischereinrichtung zum Einsatz. Der Betriebszustandswechsel kann im Falle des Getriebes beispielsweise ein Gangwechsel oder das Aktivieren einer Ausrollschaltung sein, im Falle des Scheibenwischers beispielsweise ein Richtungswechsel von Wischblättern. Auch ein von einem Fahrer vorgegebener Gasstoß oder ein Kuppelvorgang, insbesondere einer Anfahrkupplung, kann als Betriebszustandswechsel verwendet werden. Das Maskierungsgeräusch kann jedoch auch ein von einer Fahrerassistenzeinrichtung oder einer Multimediaeinrichtung erzeugtes Geräusch sein. Alternativ oder zusätzlich kann der Gasstoß oder das Kuppelvorgang jedoch auch einem Bedienvorgang des Fahrers zugeordnet sein, bei welchem das Geräuschmaskierungsereignis vorliegt.

Zusätzlich oder alternativ kann als Geräuschmaskierungsereignis selbstverständlich der Umgebungseinfluss herangezogen werden. Ein solcher wird beispielsweise durch Bodenwellen und/oder anderen unruhigen Untergrund bewirkt. Im Falle des Umgebungseinflusses wird vorzugsweise eine Periodizität des Umgebungseinflusses beziehungsweise eines von diesem erzeugten Maskierungsgeräuschs ermittelt. Das Koppeln der zweiten Achse mit der Antriebseinrichtung beziehungsweise das Entkoppeln wird anschließend entsprechend der Periodizität mit dem Maskierungsgeräusch synchronisiert. Beispielsweise wird das Koppeln und/oder Entkoppeln zu einem Zeitpunkt vorgenommen, an welchem voraussichtlich das nächste periodische Maskierungsgeräusch auftritt.

In einer bevorzugten Ausgestaltung ist vorgesehen, dass das Vorliegen des Umgebungseinflusses mittels eines einem Stoßdämpfer zugeordneten Sensors ermittelt wird. Der Sensor ist beispielsweise ein Wegsensor, insbesondere ein Federwegsensor. Mit Hilfe des Sensors kann insoweit der derzeitige Federweg des Stoßdämpfers ermittelt werden und insoweit aus dem zeitlichen Verlauf des Federwegs auf die Periodizität des Maskierungsgeräuschs beziehungsweise das nächste Auftreten des Geräuschmaskierungsereignisses geschlossen werden.

Es kann in einer bevorzugten Ausgestaltung der Erfindung vorgesehen sein, dass der Bedienvorgang mittels eines Bedienelements, insbesondere eines Bedienpedals, festgestellt wird. Das Bedienpedal ist beispielsweise ein Gaspedal, ein Bremspedal oder ein Kupplungspedal. Selbstverständlich können mehrere, insbesondere alle der genannten Bedienelemente vorliegen und entsprechend auf unterschiedliche Bedienvorgänge überwacht werden, bei welchen jeweils ein Geräuschmaskierungsereignis auftritt.

In einer weiteren bevorzugten Ausgestaltung der Erfindung ist vorgesehen, dass die Mehrheitsantriebsanforderung vorgesteuert aus wenigstens einer Betriebsgröße des Mehrachsantriebsstrangs ermittelt wird. Insbesondere soll also die Mehrachsantriebsanforderung nicht lediglich reaktiv auftreten, wenn bereits ein zu großer Schlupf zwischen Rädern der ersten Achse und einem Untergrund des Kraftfahrzeugs auftritt. Vielmehr soll bereits anhand der Betriebsgröße des Mehrheitsantriebsstrangs auf eventuell auftretenden Schlupf prädiktiv geschlossen werden und insoweit bereits deutlich vorher die Mehrheitsantriebsanforderung ermittelt, insbesondere auf den ersten Wert gesetzt werden. Entsprechend steht ausreichend Zeit zur Verfügung, um tatsächlich mit dem Koppeln der zweiten Achse mit der Antriebseinrichtung beziehungsweise Entkoppeln auf das Geräuschmaskierungsereignis zu warten.

In einer weiteren Ausgestaltung der Erfindung ist vorgesehen, dass als Betriebsgröße eine Fahrgeschwindigkeit, eine Beschleunigung, eine Untergrundneigung und/oder eine Zustandsgröße der Antriebseinrichtung verwendet werden. Grundsätzlich kann jede beliebige der genannten Größen, insbesondere auch mehrere der genannten Größen oder alle der genannten Größen in die Ermittlung der Mehrheitsantriebsanforderung eingebracht werden.

Eine bevorzugte Ausgestaltung der Erfindung sieht vor, dass bei Vorliegen der Mehrachsantriebsanforderung mit einem zweiten Wert die zweite Achse unverzüglich mit der Antriebseinrichtung gekoppelt wird. Wie bereits vorstehend erläutert, kann die Mehrachsantriebsanforderung unterschiedliche Werte aufweisen, welche die Dringlichkeit der Mehrachsantriebsforderung widerspiegeln. Bei dem ersten Wert kann ohne weiteres auf das Auftreten des Geräuschmaskierungsereignisses gewartet werden, ohne dass die Fahrstabilität und/oder die Fahrsicherheit des Kraftfahrzeugs gefährdet sind. Tritt jedoch die Mehrachsantriebsanforderung mit dem zweiten Wert auf, so muss unverzüglich die zweite Achse mit der Antriebseinrichtung gekoppelt werden. Die Mehrachsantriebsanforderung tritt beispielsweise mit dem zweiten Wert auf, wenn bereits Schlupf zwischen wenigstens einem Rad der ersten Achse und dem Untergrund des Kraftfahrzeugs auftritt. Der zweite Wert ist vorzugsweise größer als der erste Wert.

Eine bevorzugte Ausgestaltung der Erfindung sieht vor, dass die Mehrachsantriebsanforderung auf den zweiten Wert gesetzt wird, wenn Schlupf festgestellt wird und/oder anhand der Betriebsgröße Schlupf zu erwarten ist und/oder eine Vergrößerung einer Antriebsleistung angefordert wird. Die Mehrachsantriebsanforderung kann also unter unterschiedlichen Bedingungen den zweiten Wert annehmen. Beispielsweise, wie bereits festgestellt, bei Auftreten von Schlupf. Alternativ oder zusätzlich reicht bereits das voraussichtliche Auftreten von Schlupf aus, wobei zu diesem Zweck beispielsweise gemäß den vorstehenden Ausführungen die Betriebsgröße ausgewertet wird. Auch eine Vergrößerung der Antriebsleistung, also der von der Antriebseinrichtung bereitgestellten Leistung, kann zu dem Auftreten der Mehrachsantriebsanforderung mit dem zweiten Wert führen.

Die Erfindung betrifft weiterhin einen Mehrachsantriebsstrang für ein Kraftfahrzeug, insbesondere zur Durchführung des vorstehend erläuterten Verfahrens, wobei eine Achse permanent und eine zweite Achse zumindest zeitweilig mit einer Antriebseinrichtung wirkverbunden sind. Dabei ist vorgesehen, dass der Mehrachsantriebsstrang dazu ausgebildet ist, bei von der Antriebseinrichtung entkoppelter zweiter Achse und Vorliegen einer Mehrachsantriebsanforderung mit einem ersten Wert die zweite Achse erst dann mit der Antriebseinrichtung zu koppeln, wenn ein Geräuschmaskierungsereignis auftritt, oder bei mit der Antriebseinrichtung gekoppelter zweiter Achse und Wegfall der Mehrachsantriebsanforderung die zweite Achse erst dann von der Antriebseinrichtung zu entkoppeln, wenn das Geräuschmaskierungsereignis auftritt.

Auf die Vorteile einer derartigen Vorgehensweise beziehungsweise einer derartigen Ausgestaltung des Mehrachsantriebsstrangs wurde bereits eingegangen. Sowohl der Mehrachsantriebsstrang als auch das Verfahren können gemäß den vorstehenden Ausführungen weitergebildet sein, so dass insoweit auf diese verwiesen wird.

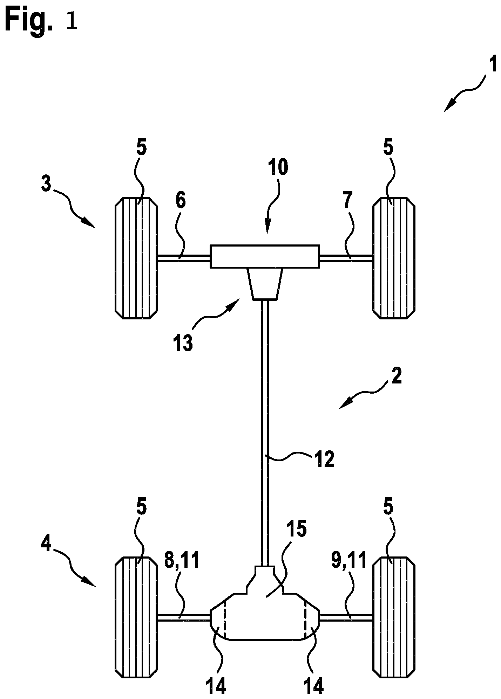

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Mehrachsantriebsstrangs für ein Kraftfahrzeug.

Die Figur zeigt einen Mehrachsantriebsstrang 1 für ein nicht weiter dargestelltes Kraftfahrzeug. Der Mehrachsantriebsstrang 1 verfügt über eine Mehrachsantriebseinrichtung 2, welche zum wahlweisen Betreiben nur einer ersten Achse 3 oder der ersten Achse 3 sowie einer zweiten Achse 4 dient. Jede der Achsen 3 und 4 verfügt in dem hier dargestellten Ausführungsbeispiel über zwei Räder 5, die an Teilachsen 6 und 7 der ersten Achse 3 und Teilachsen 8 und 9 der zweiten Achse 4 angeordnet sind. Es kann nun vorgesehen sein, dass die Teilachsen 6 und 7 der ersten Achse 3 eine erste Abtriebswelle 10 bilden. Besonders bevorzugt sind sie jedoch über ein Differentialgetriebe, insbesondere ein Achsdifferentialgetriebe an die erste Abtriebswelle 10 angeschlossen, also insbesondere starr und/oder permanent mit ihr wirkverbunden. Die Teilachsen 8 und 9 können jeweils als eine zweite Abtriebswelle 11 vorliegen. Alternativ kann es vorgesehen sein, dass die Teilachsen 8 und 9 über ein Differentialgetriebe, insbesondere ein Achsdifferentialgetriebe, an die zweite Abtriebswelle 11 angeschlossen sind.

Die Mehrachsantriebseinrichtung 2 verfügt über eine Verbindungswelle 12, über welche eine Wirkverbindung zwischen der ersten Achse 3 und der zweiten Achse 4 hergestellt werden kann. Die Verbindungswelle 12 ist vorzugsweise als Kardanwelle ausgeführt. In einer Wirkverbindung zwischen der ersten Abtriebswelle 10 und der Verbindungswelle 12 ist eine Synchronisierungskupplung 13 angeordnet. Die Synchronisierungskupplung 13 ist vorzugsweise als kraftschlüssige Kupplung ausgestaltet. Sie ermöglicht insbesondere das Übertragen eines beliebigen Anteils des anliegenden Drehmoments. In einer Wirkverbindung zwischen der Verbindungswelle 12 und der zweiten Abtriebswelle 11 ist zudem eine Trennkupplung 14 angeordnet. In dem hier dargestellten Ausführungsbeispiel liegen insoweit zwei Trennkupplungen 14 vor, wobei jeweils eine der Trennkupplungen 14 zwischen einem Differentialgetriebe 15 und einer der beiden zweiten Abtriebswellen 11 beziehungsweise den Teilachsen 8 und 9 angeordnet ist.

Die Verbindungswelle 12 ist dabei starr und/oder permanent mit dem Differentialgetriebe 15 wirkverbunden. Die Wirkverbindung zwischen dem Differentialgetriebe 15 und mithin der Verbindungswelle 12 einerseits sowie den zweiten Abtriebswellen 11 in Form der Teilachsen 8 und 9 andererseits kann mit Hilfe der Trennkupplung 14 wahlweise hergestellt oder unterbrochen sein. Vorzugsweise befinden sich die Trennkupplungen 14 stets in der gleichen Stellung, sodass entweder eine Wirkverbindung zwischen der Verbindungswelle 12 einerseits und den Teilachsen 8 und 9 andererseits hergestellt oder unterbrochen ist.

In einem ersten Betriebszustand der Mehrachsantriebsvorrichtung 2 sind die Synchronisierungskupplung 13 und die Trennkupplung 14 geöffnet, sodass die Wirkverbindung zwischen der ersten Abtriebswelle 10 und der zweiten Abtriebswelle 11 unterbrochen ist. Insoweit nachfolgend lediglich von einer Trennkupplung 14 oder einer zweiten Abtriebswelle 11 die Rede ist, so sind im Rahmen des vorliegenden Ausführungsbeispiels stets beide Abtriebswellen 11 beziehungsweise beide Trennkupplungen 14 gemeint. In einem zweiten Betriebszustand sind die Synchronisierungskupplung 13 und die Trennkupplung 14 vollständig geschlossen. Die Trennkupplung 14 ist bevorzugt als Formschlusskupplung, insbesondere als Klauenkupplung, ausgeführt.

Im Rahmen des hier vorgestellten Mehrachsantriebsstrangs 1 ist die erste Achse 3 mit einer hier nicht dargestellten Antriebseinrichtung wirkverbunden beziehungsweise wird von dieser angetrieben. Die zweite Achse wird dagegen lediglich zeitweilig über eine Schaltkupplung mit der Antriebseinrichtung wirkverbunden und insoweit von dieser angetrieben. Die Schaltkupplung kann von der Synchronisierungskupplung 13 und/oder den Trennkupplungen 14 dargestellt sein. Von Bedeutung ist dabei lediglich, dass mithilfe der Schaltkupplung die Wirkverbindung zwischen der Antriebseinrichtung und der zweiten Antriebswelle 11 unterbrechbar ist.

Der Mehrachsantriebsstrang 1 wird nun derart betrieben, dass bei von der Antriebseinrichtung entkoppelter zweiter Achse 4 und Vorliegen einer Mehrachsantriebsanforderung mit einem ersten Wert die zweite Achse 4 erst dann mit der Antriebseinrichtung gekoppelt wird, wenn ein Geräuschmaskierungsereignis auftritt, oder dass bei mit der Antriebseinrichtung gekoppelter zweiter Achse 4 und Wegfall der Mehrachsantriebsanforderung die zweite Achse erst dann von der Antriebseinrichtung entkoppelt wird, wenn das Geräuschmaskierungsereignis auftritt. Unter dem Geräuschmaskierungsereignis ist ein Ereignis zu verstehen, in dessen Rahmen ein Maskierungsgeräusch auftritt. Das Maskierungsgeräusch ist dabei dazu geeignet, ein durch das Koppeln der zweiten Achse 4 mit der Antriebseinrichtung beziehungsweise das Entkoppeln entstehendes Kopplungsgeräusch wenigstens teilweise, insbesondere vollständig, akustisch zu maskieren.

## Patentansprüche

1. Verfahren zum Betreiben eines Mehrachsantriebsstrangs (1) für ein Kraftfahrzeug, wobei eine erste Achse (3) und eine zweite Achse (4) zumindest zeitweilig mit einer Antriebseinrichtung wirkverbunden sind, **dadurch gekennzeichnet, dass** bei von der Antriebseinrichtung entkoppelter zweiter Achse (4) und Vorliegen einer Mehrachsantriebsanforderung mit einem ersten Wert die zweite Achse (4) erst dann mit der Antriebseinrichtung gekoppelt wird oder bei mit der Antriebseinrichtung gekoppelter zweiter Achse (4) und Wegfall der Mehrachsantriebsanforderung die zweite Achse erst dann von der Antriebseinrichtung entkoppelt wird, wenn ein ein von dem Koppeln oder Entkoppeln erzeugtes Geräusch zumindest teilweise maskierendes Geräuschmaskierungsereignis auftritt, wobei das Koppeln der zweiten Achse (4) mit der Antriebseinrichtung und/oder das Entkoppeln der zweiten Achse (4) von der Antriebseinrichtung verzögert werden, bis das Geräuschmaskierungsereignis vorliegt.

2. Verfahren nach Anspruch 1, **dadurch gekennzeichnet, dass** das Geräuschmaskierungsereignis ein Betriebszustand des Kraftfahrzeugs, ein Betriebszustandswechsel des Kraftfahrzeugs, insbesondere eines Fahrzeugaggregats, ein Bedienvorgang eines Fahrers und/oder ein Umgebungseinfluss ist.

3. Verfahren nach einem der vorherigen Ansprüche, **dadurch gekennzeichnet, dass** der Bedienvorgang mittels eines Bedienelements, insbesondere eines Bedienpedals, festgestellt wird.

4. Verfahren nach einem der vorherigen Ansprüche, **dadurch gekennzeichnet, dass** das Vorliegen des Umgebungseinflusses mittels eines einem Stoßdämpfer zugeordneten Sensors ermittelt wird.

5. Verfahren nach einem der vorherigen Ansprüche, **dadurch gekennzeichnet, dass** die Mehrachsantriebsanforderung vorgesteuert aus wenigstens einer Betriebsgröße des Mehrachsantriebsstrangs (1) ermittelt wird.

6. Verfahren nach Anspruch 5, **dadurch gekennzeichnet, dass** als Betriebsgröße eine Fahrgeschwindigkeit, eine Beschleunigung, eine Untergrundneigung und/oder eine Zustandsgröße einer Antriebseinrichtung verwendet wird.

7. Verfahren nach einem der vorherigen Ansprüche, **dadurch gekennzeichnet, dass** bei Vorliegen der Mehrachsantriebsanforderung mit einem zweiten Wert die zweite Achse unverzüglich mit der Antriebseinrichtung gekoppelt wird.

8. Verfahren nach einem der vorherigen Ansprüche, **dadurch gekennzeichnet, dass** die Mehrachsantriebsanforderung auf den zweiten Wert gesetzt wird, wenn ein Schlupf festgestellt wird und/oder anhand der Betriebsgröße Schlupf zu erwarten ist und/oder eine Vergrößerung einer Antriebsleistung angefordert wird.

9. Mehrachsantriebsstrang (1) für ein Kraftfahrzeug, insbesondere zur Durchführung des Verfahrens nach einem vorhergehenden Ansprüche, wobei eine erste Achse (3) permanent und eine zweite Achse (4) zumindest zeitweilig mit einer Antriebseinrichtung wirkverbunden sind, **dadurch gekennzeichnet, dass** der Mehrachsantriebsstrang (1) dazu ausgebildet ist, bei von der Antriebseinrichtung entkoppelter zweiter Achse (4) und Vorliegen einer Mehrachsantriebsanforderung mit einem ersten Wert die zweite Achse (4) erst dann mit der Antriebseinrichtung zu koppeln oder bei mit der Antriebseinrichtung gekoppelter zweiter Achse (4) und Wegfall der Mehrachsantriebsanforderung die zweite Achse erst dann von der Antriebseinrichtung zu entkoppeln, wenn ein ein von dem Koppeln oder Entkoppeln erzeugtes Geräusch zumindest teilweise maskierendes Geräuschmaskierungsereignis auftritt, wobei das Koppeln der zweiten Achse (4) mit der Antriebseinrichtung und/oder das Entkoppeln der zweiten Achse (4) von der Antriebseinrichtung verzögert werden, bis das Geräuschmaskierungsereignis vorliegt.

## Claims

1. Method for operating a multi-axle drive train (1) for a motor vehicle, wherein a first axle (3) and a second axle (4) at least temporarily are connected operatively to a drive device, **characterised in that** when second axle (4) is decoupled from the drive device and presence of a multi-axle drive request with a first value, the second axle (4) is only then coupled to the drive device or when a second axle (4) is coupled to the drive device and missing multi-axle drive request, the second axle is decoupled from the drive device only when a noise generated by the coupling or decoupling at least partially masking noise masking event occurs, wherein said coupling of the second axle (4) with the drive device and / or said decoupling of the second axle (4) are delayed by the drive device until the noise masking event is present.

2. Method according to claim 1, **characterised in that** the noise masking event is an operating condition of the motor vehicle, a change of operating state of the motor vehicle, particularly of a vehicular unit, a driver's operation and / or an environmental influence.

3. Method according to one of the preceding claims, **characterised in that** the operating process is detected by means of a control element, in particular an operating pedal.

4. Method according to one of the preceding claims, **characterised in that** the presence of the environmental influence is determined by means of a sensor assigned to a shock absorber.

5. Method according to one of the preceding claims, **characterised in that** the multi-axle drive request is determined pilot-controlled from at least one operating variable of the multi-axle drive train (1).

6. Method according to claim 5, **characterised in that** driving speed, acceleration, road gradient and / or state variable of a drive device is used as operation variable.

7. Method according to one of the preceding claims, **characterised in that,** in the presence of the multi-axle drive request with a second value, the second axle is immediately coupled to the drive device.

8. Method according to one of the preceding claims, **characterised in that,** the multi-axle drive request is set to the second value when slip is detected and / or slip is expected based on the operation variable and / or an increase in drive power is requested.

9. Multi-axle drive train (1) for a motor vehicle, particularly for execution of the method according to one of the preceding claims, wherein a first axle (3) is permanent and a second axle (4) is at least temporarily operatively connected to a drive device, **characterised in that** the multi-axle drive train (1) is designed, for the second axle (4) decoupled from the drive device and presence of a multi-axle drive request with a first value, to couple the second axle (4) with the drive device only then or with the second axle (4) coupled to the drive device and omission of the multi-axis drive request only then to decouple the second axle from the drive device, when an at least partially masking noise masking event occurs, from noise generated by the coupling or decoupling, wherein the coupling of the second axle (4) with the drive device and / or the decoupling of the second axle (4) from the drive device is delayed until the noise masking event is present.

## Revendications

1. Procédé de fonctionnement d'un groupe d'entraînement d'essieux multiples (1) pour un véhicule automobile,
dans lequel un premier essieu (3) et un deuxième essieu (4) sont en liaison active au moins temporairement avec un dispositif d'entraînement,
**caractérisé en ce que**, lorsque le deuxième essieu (4) est débrayé du dispositif d'entraînement et en présence d'une demande d'entraînement d'essieux multiples avec une première valeur, le deuxième essieu (4) n'est embrayé avec le dispositif d'entraînement ou, lorsque le deuxième essieu (4) est embrayé avec le dispositif d'entraînement et en l'absence d'une demande d'entraînement d'essieux multiples, le deuxième essieu n'est débrayé du dispositif d'entraînement - que s'il apparaît un événement de masquage de bruit masquant au moins partiellement un bruit produit par l'embrayage ou le débrayage,
l'embrayage du deuxième essieu (4) avec le dispositif d'entraînement et/ou le débrayage du deuxième essieu (4) du dispositif d'entraînement étant alors retardés jusqu'à ce que l'événement de masquage de bruit soit présent.

2. Procédé selon la revendication 1, **caractérisé en ce que** l'événement de masquage de bruit est un état de fonctionnement du véhicule automobile, un changement d'état de fonctionnement du véhicule automobile, en particulier d'un groupe moteur de véhicule, une opération de commande d'un conducteur et/ou une influence de l'environnement.

3. Procédé selon l'une quelconque des revendications précédentes, **caractérisé en ce que** l'opération de commande est constatée au moyen d'un élément de commande, en particulier une pédale de commande.

4. Procédé selon l'une quelconque des revendications précédentes, **caractérisé en ce que** la présence de l'influence de l'environnement est déterminée au moyen d'un capteur associé à un amortisseur.

5. Procédé selon l'une quelconque des revendications précédentes, **caractérisé en ce que** la demande d'entraînement d'essieux multiples est déterminée par une commande préalable à partir d'au moins une grandeur de fonctionnement du groupe d'entraînement d'essieux multiples (1).

6. Procédé selon la revendication 5, **caractérisé en ce que**, comme grandeur de fonctionnement, on utilise une vitesse d'avance, une accélération, une inclinaison du sol et/ou une grandeur d'état d'un dispositif d'entraînement.

7. Procédé selon l'une quelconque des revendications précédentes, **caractérisé en ce que**, en présence d'une demande d'entraînement d'essieux multiples avec une deuxième valeur, le deuxième essieu est immédiatement embrayé avec le dispositif d'entraînement.

8. Procédé selon l'une quelconque des revendications précédentes, **caractérisé en ce que** la demande d'entraînement d'essieux multiples est mise à la deuxième valeur lorsqu'on constate un patinage et/ou lorsqu'on doit s'attendre à un patinage en raison de la grandeur de fonctionnement et/ou lorsqu'on demande une augmentation de la puissance d'entraînement.

9. Groupe d'entraînement d'essieux multiples (1) pour un véhicule automobile, en particulier pour la mise en oeuvre du procédé selon l'une quelconque des revendications précédentes, dans lequel un premier essieu (3) est en liaison active en permanence avec un dispositif d'entraînement et un deuxième essieu (4) est en liaison active au moins temporairement avec le dispositif d'entraînement,
**caractérisé en ce que** le groupe d'entraînement d'essieux multiples (1) est conçu pour, lorsque le deuxième essieu (4) est débrayé du dispositif d'entraînement et en présence d'une demande d'entraînement d'essieux multiples avec une première valeur, n'embrayer le deuxième essieu (4) avec le dispositif d'entraînement ou, lorsque le deuxième essieu (4) est embrayé avec le dispositif d'entraînement et en l'absence d'une demande d'entraînement d'essieux multiples, ne débrayer le deuxième essieu du dispositif d'entraînement - que s'il apparaît un événement de masquage de bruit masquant au moins partiellement un bruit produit par l'embrayage ou le débrayage, l'embrayage du deuxième essieu (4) avec le dispositif d'entraînement et/ou le débrayage du deuxième essieu (4) du dispositif d'entraînement étant alors retardés jusqu'à ce que l'événement de masquage de bruit soit présent.
